# EUROPÄISCHE PATENTSCHRIFT

(11) **EP 0 554 295 B1**
(45) Veröffentlichungstag und Bekanntmachung des Hinweises auf die Patenterteilung: **18.01.1995**
(21) Anmeldenummer: 91918204.8
(22) Anmeldetag: 16.10.1991
(51) Int. Cl.: F02B 75/06, F02B 75/32, F16H 21/34

(54) **KOLBENAUFHÄNGUNG FÜR EINE HUBKOLBENMASCHINE**
PISTON CONNECTION FOR A RECIPROCATING PISTON ENGINE
SUPPORT DE PISTON POUR UN MOTEUR ALTERNATIF

(30) Priorität: 26.10.1990 DE 4034162
(43) Veröffentlichungstag der Anmeldung: 11.08.1993
(73) Patentinhaber: Zettner, Michael L., Ashdod 77663 (IL)
(72) Erfinder: Zettner, Michael L., Ashdod 77663 (IL)
(74) Vertreter: Brose, Manfred, Dr.
(86) Internationale Anmeldenummer: EP9101964
(87) Internationale Veröffentlichungsnummer: WO9208043

(56) Entgegenhaltungen:
- US-A- 2 229 788
- US-A- 4 614 169
- WO89/02028
- Patent Abstracts of Japan, vol. 7, No. 217 (M-245)(1362) 27. September 1983 & JP, A, 58 110 824 (MASAO SHINOZUKA) 1. Juli 1983

## Beschreibung

Das Kippspiel des Kolbens in einer Hubkolbenmaschine, z.B. in einem Viertakt-Kolbenmotor, ist seit langem bekannt und erforscht. Vergleiche dazu z.B. Carl Riedel, Konstruktion und Berechnung moderner Automobil- und Kraftradmotoren - 2. Auflage, Berlin 1931, Seite 141, Fig. 144.

Um Kräfte auszugleichen, die durch das Kippspiel am Hubkolben entstehen, sind neben dem Einsatz von Schmiermitteln konstruktive Maßnahmen nötig.
Bei einem Viertakt-Hubkolbenmotor bewegt sich der Kolben nicht nur nach oben und unten sondern in der Pleuelebene auch seitwärts. Dabei wechselt der Kolben sechs Mal pro Arbeitszyklus, also zwei Umdrehungen, die Zylinderseite, auf die er drückt. Die dabei auftretende Reibung bewirkt ca. 50 - 75 % der mechanischen Reibungsverluste. Um die dabei auftretende Kräfte und deren Wirken auf Material zu mildern, greift man in der Motorenkonstruktion u.a. zu, seitenversetzten Wellen. Die Kurbelwellen liegen nicht genau mittig unter den Kolben, sondern leicht seitenversetzt.

Ebenso ist es üblich, die Kurbelwelle zu desachsieren (DE-OS 2751932), damit die Schläge bei Seitenwechsel weicher sind und der Kolben abrollt. Damit lassen sich die Seitenkräfte des Kolbens mildern. Die restlichen Seitenkräfte müssen dennoch durch einen Schmierfilm aufgefangen werden, der verhindert, daß der Kolben an der Zylinderwand frißt.

Von MONTANARIE (WO-A-89/02028) ist ein Motor mit zwei Kurbelwellen vorgeschlagen worden, wobei die Achsen der Kurbelwellen parallel zueinander liegen und jede Kurbelwelle jeweils mit zwei parallelen Pleueln auf jeweils einen Kolbenbolzen im Kolben arbeitet. Obwohl sich somit im Kolben zwei parallele Kolbenbolzen befinden, hat diese Motorkonstruktion in Bezug auf die Reibung zwischen Kolben- und Zylinderwand sämtliche Nachteile bekannter Konstruktionen, die nur einen Kolbenbolzen besitzen.

Ein weiteres bekanntes Mittel, welches die Seitenkräfte des Kolbens mildert, ist eine Kolbenaufhängung mittels eines Kreuzkopfes, wie er vor allem bei doppelt wirkenden Dampfmaschinenkolben eingesetzt wird.
Auch Konstruktionen, bei denen die Kolben an geführten Stangen aufgehängt sind, die in Linearlagern laufen und auf einer Seite in einem Kreuzkopf enden, sind bekannt. Sie wurden vor allem bei Lokomotiven verwendet.
Bei diesen vorgenannten Konstruktionen ist im Arbeitsraum oder an den sich dem Arbeitsraum anschließenden Räumen eine Schmierung vorhanden.
Alle vorgeschriebenen Konstruktionen funktionieren in der Praxis nur mit Schmiermittel.

Die unter dem Namen Philips-Rhombengetriebe von R.J. MEIJER (DE-AS 1080351) bekannt gewordene Konstruktion benötigt im Arbeitsraum der Kolben kaum eine Schmierung. Um die durch die Zahnräder bedingte wesentlich höhere Reibung des Rhombengetriebes zu, mildern werden die Zahnräder geschmiert oder gefettet.Der Kolben muß, falls ein schmierstofffreier Arbeitsraum vom Einsatz gefordert ist, das Kurbelgehäuse gegen den Arbeitsraum abdichten.

Ähnliches gilt auch für die Pleuelanordnung nach FICHT mit Kurbelschleife (DE-OS 3433510). Das Philips-Rhombengetriebe als Kolbenaufhängung, ebenso wie die Kolbenaufhängung von Ficht, weisen, bedingt durch die Übertragung mittels eines nur in einem Punkt beweglichen Pleuels, nur geringes Kippspiel des Kolbens auf.

Außer der Kolbenlagerung mittels lineargeführten Kolbenstangen an beiden Kolbenseiten haben alle bekannten Kolbenaufhängungen ein von der beweglichen, in einem Drehpunkt gelagerten Befestigung bedingtes Kippspiel des Kolbens. Der Kolben hat Spiel zur Zylinderwand und kann sich auf die Zylinderwand zu bewegen. Diese Bewegung ist meist eine Drehbewegung, die von der drehbaren Lagerung des kraftabnehmenden Teiles an der Kolbenaufhängung selbst herrührt. Im Beispiel mit dem Rhombengetriebe beschränkt sich das Kippspiel auf das Spiel in der Verzahnung der Zahnräder, wobei sich dieses Spiel durch den Hebeleffekt vom Eingriffspunkt der Zahnräder bis zum Zwickelpunkt am Kolben entsprechend multipliziert.

Im Beispiel mit beiderseitigen Kolbenstangen am Kolben wird dieses Spiel auf das Lagerspiel der Kolbenstangen beschränkt. Diese Kolbenstangenlagerung ist aber zum Arbeitsraum hin nur schlecht abdichtbar und weist höhere Reibungsverluste auf.

Bei allen vorbeschriebenen Ausführungsbeispielen ist eine Schmierung des Kolbens bzw. der Kolbenstangen erforderlich, um ein Fressen von Teilen zu vermeiden.

Eine trockene Gleitlagerung anstelle einer Schmierung, beispielsweise durch Polyimide, die beispielsweise unter dem Namen "Vespel" von Dupont in Frankreich eingesetzt werden, hat sich in der Praxis bisher nicht bewährt. Das Kippspiel führt zu höheren Abnützungen, so daß nach einer gewissen Zeit Undichtigkeiten auftreten.

Es gibt also bisher keine langlebige, als Motor arbeitende Kolbenmaschine, die ohne Schmierstoffe auskommen kann. Bei trockenlaufenden Kolbenpumpen sind die Probleme ähnlich, wobei sich die wesentlich niedrigeren Drücke für den Verschleiß günstiger auswirken, als die Druckspitzen in Motoren.

Der Erfindung liegt daher die Aufgabe zugrunde, eine Kolbenaufhängung für eine als Motor oder Pumpe arbeitende Hubkolbenmaschine zu schaffen, bei der das Spiel zwischen Kolben und Zylinder so gering bemessen werden kann, daß keine Schmierung zwischen Kolben und Zylinder notwendig ist, kein nennenswerter Verschleiß von trockenen Dichtungsringen mehr auftritt und eine Abdichtung von Kolbengehäuse oder Kolbenführungsstangen entfallen kann.

Zur Lösung der Aufgabe geht die Erfindung aus von einer Hubkolbenmaschine, insbesonderer Kraftmaschine oder Pumpe, mit einem oder zwei Kolben pro Zylinder und für jeden Kolben mit einer Kraftübertragung, bestehend jeweils aus Pleuel oder Rhombe und einer Kurbel. Die Erfindung besteht darin, daß pro Kolben mindestens eine dritte Kraftübertragung, bestehend aus Pleuel und Kurbel vorgesehen ist, wobei die Achsen der zusätzlichen Kurbelwellen nicht kongruent sind mit den Achsen der Kurbelwellen für die erste und zweite Kraftübertragung.

In Fortbildung der Erfindung ist ein scheibenförmiger Kolben-Lagerring vorgesehen, an dem der Kolben mit einem Ende und die Pleuel gelagert sind.

In weiterer Fortbildung der Erfindung ist der Kolben-Lagerring mit einer der Kolbenform entsprechenden Ausnehmung versehen, deren Durchmesser um einen geringen Betrag größer ist als, der Durchmesser des Kolbens, so daß der Kolben durch den Kolben-Lagerring hindurch montierbar und demontierbar ist.

In Ausgestaltung der Erfindung besteht die Kolbenaufhängung aus drei etwa ein Dreibein bildenden Pleueln mit Kurbelwellen.

In den Zeichnungen sind Ausführungsbeispiele der Erfindung wiedergegenben. Es zeigen:
- Fig. 1: eine perspektivische Ansicht eines mit drei Pleueln und Kurbelwellen gelagerten Hubkolbens,
- Fig. 1A: eine Ansicht eines Kolbens, welcher an nur einem Pleuel gelagert ist, mit eingezeichneten zugehörigen Kraftvektoren.
- Fig. 2: eine perspektivische Ansicht der Kolbenlagerung von Figur 1,
- Fig. 3: eine perspektivische Ansicht eines mit acht Pleueln und vier Kurbelwellen gelagerten Hubkolbens und
- Fig. 4: eine perspektivische Ansicht der Kolbenlagerung von Figur 3.

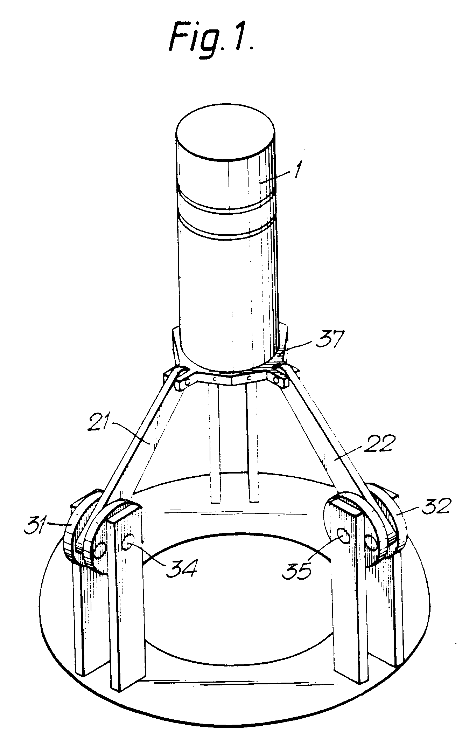

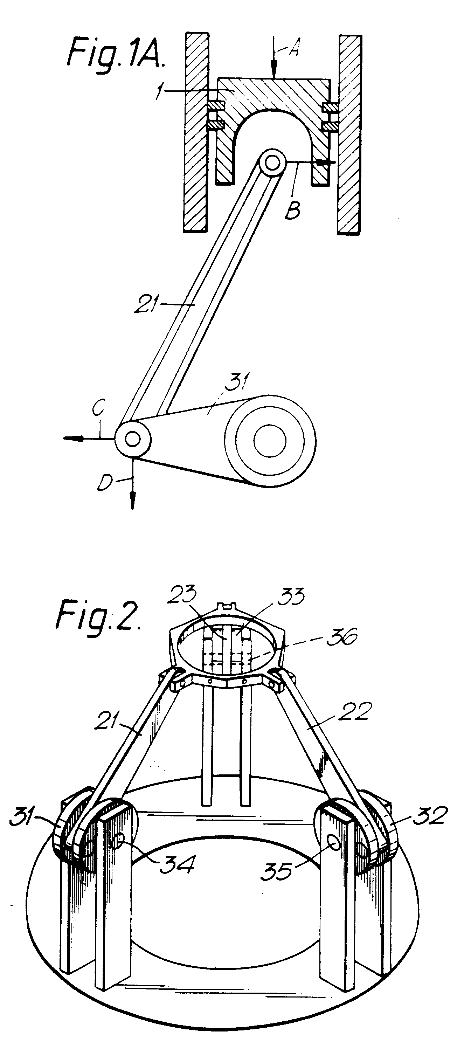

Im ersten Ausführungsbeispiel nach den Figuren 1 und 2 ist die Aufhängung des Kolbens 1 einer Hubkolbenmaschine abgebildet, wobei der Kolben 1 an drei Pleueln 21, 22, 23 gelagert ist. Die Pleuel 21, 22, 23 sind in diesem Fall alle gleich lang und sind an den drei Kurbeln 31, 32, 33 gelagert. Die Kurbelwellen 34, 35, 36 der Kurbeln 31, 32, 33 liegen nicht auf einer Geraden und müssen auch untereinander nicht miteinander verbunden sein, wie z. B. beim Rhombengetriebe. Damit ist der Hubkolben 1 in jedem Punkt der Auf- und Abwärtsbewegung in Bezug auf die Reibung zwischen Kolben 1 und Zylinderwand nahezu spielfrei gelagert. Das Spiel beschränkt sich auf die Lagertoleranzen. Die Kurbelwellen 34, 35, 36 müssen nicht in der gleitchen Flucht bzw. parallel zueinander liegen. Auch kann die Kröpfung der mindestens drei Kurbeln 31, 32, 33 verschieden sein.

Wie in Figur 1A dargestellt ist, wird von der auf den Kolben 1 einwirkende Kraft A bei der Abwärtsbewegung des Kolbens 1 durch das Pleuel 21 die Kraftkomponente D auf die Kurbel 31 übertragen. Zu der an der Kurbel 31 wirkenden Kraftkomponente C, die senkrecht auf der Bewegungsrichtung des Kolbens 1 steht, entsteht am Kolben 1 eine Gegenkraft B, die den Kolben 1 ebenfalls senkrecht zu seiner Bewegungsrichtung, jedoch in entgegengesetzter Richtung auslenkt. Die Kräfte sind in Figur 1A eigezeichnet. Diese Gegenkraft B verursacht bei herkömmlichen Kolbenaufhängungen den Verschleiß. Im Falle der Erfindung wird diese Kraft von Gegenkräften der beiden Pleuel 32, 33 abgefangen und völlig ausgeglichen. Die seitwärts und senkrecht zur Bewegungsrichtung des Kolbens 1 wirkenden Kräfte treten nicht am Kolben 1 auf .Sie sind nun auf die Kurbelwellen 34, 35, 36 übertragen und wirken nicht mehr verschleißend zwischen Kolben 1 und Zylinder. Zu erwähnen ist noch, daß dem nachteiligen Mehraufwand von drei Kurbelwellen 34, 35, 36 gegenüber bisher einer Kurbelwelle, der Vorteil gegenübersteht, daß die Kröpfung der Kurbeln 31, 32, 33 kleiner gehalten werden kann als der Hub. Auch wird die einzelne Kurbelwelle 34, 35, 36 geringer belastet. Dies führt zur Vereinfachung der Kurbelwelle 34, 35, 36 und deren Lagerung.

In Figur 2 ist die Kolbenhalterung nach Figur 1 mit demontiertem Kolben 1 wiedergegeben. Hieraus ist zu ersehen, daß der Kolben 1 an seinem unteren Ende von einem Lagerring 37 umfaßt und eingespannt wird. Wird der Lagerring 37 geöffnet, dann kann der Kolben 1 nach unten durch den Lagerring 37 hindurchgezogen und ausgetauscht werden.

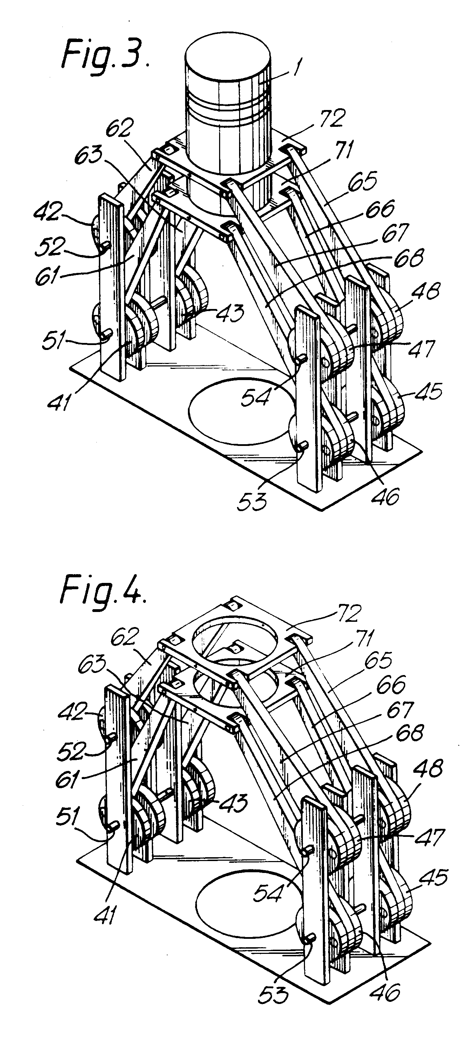

Aus Gründen der einfacheren Motorkonstruktion wird man parallel zueinander laufende Kurbelwellen wählen. Im zweiten Ausführungsbeispiel nach Figur 3 ist deshalb eine Kolbenaufhängung mit vier Kurbelwellen 51, 52, 53, 54 und vier geteilten Pleueln 61 - 68 wiedergegeben.
In diesem Ausführungsbeispiel liegen die vier Kurbelwellen 51, 52, 53, 54 alle in einer Flucht. Die Kröpfung der acht Kurbein 41 - 48 betragen etwa ein Drittel des Hubes. Die Pleuel 61 - 68 sind geteilt und die in zwei Ebenen liegenden Lagerringe 71, 72, weit außen am Kolben 1 befestigt, um zusätzliche Stabilität zu erreichen.

Die Kurbelwellen 51, 52, 53, 54 können wegen des Seitenversatzes zur Kolbenmittellinie und wegen der aufgeteilten Kräfte geringer dimensioniert werden. Durch den Seitenversatz der Kurbelwellen 51, 52, 53, 54 wird auch die Kröpfung der Kurbeln 41 - 48 kleiner. Die seitwärts zur Kolbenmittellinie liegenden Kurbelwellen 51, 52, 53, 54 führen zu einem günstigeren Angriff der Kräfte auf die Kurbelwellen 51, 52, 53, 54. Wirkt ein Pleuel 61 - 68 bei einer herkömmlichen Hubkolben-Kraftmaschine am oberen und unteren Totpunkt des Kolbens 1 größtenteils radial auf die Kurbelwelle, so ist dies bei der Erfindung je nach Größe der Auslenkung bedeutend günstiger. Die tangentialen Kräfte überwiegen deutlich die radial wirkenden Kräfte auf die Kurbelwelle. Die Kraftaufteilung und der Seitenversatz der Kurbelwellen bedingt einen tangentialen Angriff der Kräfte von den Pleueln 61 - 68 auf die Kurbelwellen 51, 52, 53, 54 anstelle eines radialen Angriffs. Aus diesem Grund können die Pleuellager sowie die Kurbelwellenlager mit Wälzlagern ausgestattet werden. Wählt man z. B. gekapselte Wälzlager, so ist eine Schmierung des Kurbelwellenkomplexes nicht mehr notwendig. Eine derart gebaute Hubkolbenmaschine käme daher ohne jegliche Zwangsschmierung aus.

Durch diese spielfreie Lagerung des Kolbens l können nun Dichtungen zum Einsatz kommen, die trocken laufen und nach einer gewissen Einlaufzeit keiner Abnützung mehr unterliegen, die zu Motorausfällen oder Undichtigkeiten führen können.

Ein weiterer Vorteil dieser Art der Kolbenaufhängung besteht in der Möglichkeit, den Kolben 1 an den Kurbelwellen vorbei, durch den Boden des Kurbelwellengehäuses hindurch montieren und demontieren zu können. Um dies zu ermöglichen, ist der Kolben 1 geteilt. Ein Teil des Kolbens 1, an welchem die Pleuel 61 - 68 befestigt sind, stellt damit die Aufhängung des eigentlichen Kolbens dar.

In Figur 4 ist die Kolbenaufhängung nach Figur 3 mit demontiertem Kolben 1 wiedergegeben. In diesem zweiten Ausführungsbeispiel wird der Kolben 1 an seinem unteren Ende von zwei in zwei Ebenen liegenden Lagerringen 71, 72 besonders kippsicher umfaßt und eingespannt. Werden die Lagerringe 71, 72 geöffnet, dann kann auch in diesem Ausführungsbeispiel der Kolben 1 nach unten durch die Lagerringe 71, 72 hindurchgezogen und ausgetauscht werden. Die Anordnungen der Pleuel nach den Figuren 1 - 4 ermöglichen es, den eigentlichen Kolben 1 in sehr kurzer Zeit aus dem Motor oder aus der Pumpe auszubauen und wieder einzubauen. Damit wird der Wechsel von Kolbendichtringen eine einfache Angelegenheit, da der Kolben als Einzelteil problemlos herausnehmbar ist.

Der Kolben läßt sich mittels Gewinde, Bajonettverschluß, Schrauben oder anderen technisch bekannten Methoden an dem Lagerring 37 bzw. an den Lagerringen 71, 72 oder der Kolbenaufhängung befestigen.

Es lassen sich bei der Erfindung auch mehrere Kolben auf einen Kurbelwellensatz montieren, z. B. bei zwei gegenläufigen oder versetztlaufenden Kolben in einem Zylinder. Ebenso läßt sich die Anzahl der Pleuel beliebig erhöhen.

## Patentansprüche

1. Kolbenaufhängung für eine Hubkolbenmaschine, insbesondere Kraftmaschine oder Pumpe, mit einer Kolbenführung durch die Zylinderwand, mit einem oder zwei Kolben pro Zylinder und für jeden Kolben mit zwei Kraftübertragungen, bestehend jeweils aus einer Kurbel und mindestens einem Pleuel oder einer Rhombe, wobei die Achsen der beiden Kurbelwellen nicht kongruent sind, gekennzeichnet durch mindestens eine, die Kolbenführung durch die Zylinderwand ersetzende und die Reibung zwischen Kolbenwand und Zylinderwand verhindernde dritte Kraftübertragung, bestehend aus einer Kurbel (33) und mindestens einem Pleuel (23), wobei die Achsen der zusätzlichen Kurbelwellen (36) nicht kongruent sind mit den Achsen der Kurbelwellen (34, 35) für die erste und zweite Kraftübertragung.

2. Kolbenaufhängung nach Anspruch 1, gekennzeichnet durch mindestens einen scheibenförmigen Kolben-Lagerring (37, 71, 72), an dem der Kolben (1) mit einem Ende und der Pleuel (21, 22, 23; 61 - 68) gelagert sind.

3. Kolbenaufhängung nach Anspruch 2, dadurch gekennzeichnet, daß der Kolben-Lagerring (37; 71, 72) mit einer der Kolbenform entsprechenden Ausnehmung versehen ist, deren Durchmesser um einen geringen Betrag größer ist als der Durchmesser des Kolbens (1), so daß im Betrieb der Kolben (1) vom Kolben-Lagerring (37; 71, 72) umfaßt und eingespannt wird und außer Betrieb der Kolben (1) durch den Kolben-Lagerring (37; 71, 72) hindurch montierbar und demontierbar ist.

4. Kolbenaufhängung nach einem der Ansprüche 1 oder 3, gekennzeichnet durch drei, etwa ein Dreibein bildende Pleuel (21, 22, 23) mit Kurbelwellen (34, 35, 36).

## Claims

1. Piston suspension for a reciprocating piston engine, especially a prime motor or pump, with a piston guidance by the cylinder wall, with one or two pistons per cylinder and with, for each piston, two force transmissions respectively consisting of a crank and at least one connecting rod or rhombus, wherein the axes of the two crankshafts are not congruent, characterised by at least a third force transmission which replaces the piston guidance by the cylinder wall and prevents friction between piston skirt and cylinder wall and which consits of a crank (33) and at least one connecting rod (23), wherein the axes of the additional crankshafts (33) are not congruent with the axes of the crankshafts (34, 35) for the first and second force transmission.

2. Piston suspension according to claim 1, characterised by at least one discoid piston mounting ring (37, 71, 72) at which the piston at one end and the connecting rod (21, 22, 23; 61-68) are mounted.

3. Piston suspension according to claim 2, characterised in that the piston mounting ring (37; 71, 72) is provided with a cutout which corresponds to the piston shape and the diameter of which is greater than the diameter of the piston (1) by a small amount so that in operation the piston (1) is embraced and clamped in by the piston mounting ring (37; 71, 72) and out of operation the piston (1) is installable and removable through the piston mounting ring (37; 71, 72).

4. Piston suspension according to claim 1 or claim 3, characterised by three connecting rods (21, 22, 23), approximately forming a tripod, with crankshafts (31, 32, 33).

## Revendications

1. Suspension de piston pour une machine à piston alternatif, en particulier un moteur ou une pompe, comprenant un guidage de piston au travers de la paroi du cylindre, un ou deux pistons par cylindre et pour chaque piston deux mécanismes de transmission constitués à chaque fois d'une manivelle et d'au moins une bielle ou un losange, les axes des deux manivelles ne coïncidant pas, **caractérisée en ce** qu'elle comprend au moins un troisième mécanisme de transmission remplaçant le guidage du piston au travers de la paroi du cylindre et empêchant la friction entre la paroi du piston et la paroi du cylindre, qui est constitué d'une manivelle (33) et d'au moins une bielle (23) les axes des manivelles supplémentaires (36) ne coïncidant pas avec les axes des manivelles (34, 35) pour les premier et deuxième mécanismes de transmission.

2. Suspension de piston selon la revendication 1, caractérisée en ce qu'elle comprend au moins un palier de piston (37, 71, 72) en forme de disque sur lequel sont montées une des extrémités du piston (1) et la bielle (21, 22, 23; 61 à 68).

3. Suspension de piston selon la revendication 2, caractérisée en ce que le palier de piston (37; 71, 72) comporte un évidement correspondant à la forme du piston, dont le diamètre est légèrement plus grand que le diamètre du piston (1), de manière qu'en service, le piston (1) est entouré et enserré par le palier de piston (37; 71, 72) et qu'à l'arrêt, le piston (1) peut être monté et démonté au travers du palier de piston (37; 71, 72).

4. Suspension de piston selon l'une des revendications 1 ou 3, caractérisée en ce qu'elle comprend trois bielles (21, 22, 23) avec des manivelles (34, 35, 36), qui forment sensiblement un trépied.
